# EUROPEAN PATENT SPECIFICATION

(11) **EP 4 476 564 B1**
(45) Date of publication and mention of the grant of the patent: **24.09.2025**
(21) Application number: 23702151.4
(22) Date of filing: 31.01.2023
(51) Int. Cl.: G01S 13/00, H04W 4/38, H04W 72/00, H04L 47/25, H04W 24/02, H04W 72/04

(54) **A CONTROLLER FOR RECONFIGURING A RADIOFREQUENCY-BASED SENSING SYSTEM A METHOD THEREOF**
STEUERUNG ZUM REKONFIGURIEREN EINES HOCHFREQUENZBASIERTEN ABTASTSYSTEMS, EIN VERFAHREN DAFÜR
DISPOSITIF DE COMMANDE POUR RECONFIGURER UN SYSTÈME DE DÉTECTION BASÉ SUR LA RADIOFRÉQUENCE ET PROCÉDÉ ASSOCIÉ

(30) Priority: 07.02.2022 EP 22155323
(43) Date of publication of application: 18.12.2024
(73) Proprietor: Signify Holding B.V., 5656 AE Eindhoven (NL)
(72) Inventor: VAN GOOR, Dave, Willem, 5656 AE Eindhoven (NL); HAVERLAG, Marco, 5656 AE Eindhoven (NL); ZANDER, Paulus, Jacobus, 5656 AE Eindhoven (NL); VAN DER HEIJDEN, Gerardus, Wilhelmus, Theodorus, 5656 AE Eindhoven (NL)
(74) Representative: Verweij, Petronella Daniëlle
(86) International application number: PCT/EP2023/052294
(87) International publication number: WO 2023/148157

(56) References cited:
- WO-A1-2021/244930
- WO-A2-2011/109568
- US-A1- 2020 064 456
- KAUR MANPREET ET AL: "A Comparative Analysis of Various Congestion Control Schemes in Wireless Sensor Networks", 2018 8TH INTERNATIONAL CONFERENCE ON CLOUD COMPUTING, DATA SCIENCE & ENGINEERING (CONFLUENCE), IEEE, 11 January 2018 (2018-01-11), pages 14 - 15, XP033390256, DOI: 10.1109/CONFLUENCE.2018.8442449

## Description

### FIELD OF THE INVENTION

The invention relates to a method of reconfiguring a radiofrequency-based sensing system. The invention further relates to a controller, a system and a computer program product for reconfiguring a radiofrequency-based sensing system.

### BACKGROUND

Radiofrequency based sensing is a sensing mechanism involving wireless transceivers (or transmitters/receivers) arranged for transmitting and receiving radiofrequency (RF) signals. These RF signals, which may also be used for radio communication, when passing through a sensing volume, are affected by presence/movement of a person within the sensing volume e.g., via reflection, absorption, scattering etc. The radiofrequency-based sensing uses such deviations of radiofrequency signals to infer presence of the person. The processing of the affected radiofrequency signals to infer presence can be either performed locally e.g., at the receiving node, or it can be performed externally at an external device. For external processing, a collector node is generally used to collect radiofrequency signals and transmit it to the external device. Radiofrequency-based sensing also extends to other applications such as location detection, fall detection, gesture detection, vital signs detection etc. which are also based on how radiofrequency signals are affected in the sensing volume.

KAUR MANPREET ET AL. discloses a Wireless Sensor Network (WSN) comprising base stations and numerous sensor nodes that are placed in the geographical areas. These sensor nodes collect the information from areas and sends to the base station (sink node). When there are large numbers of sensor nodes is busy in transmitting data towards sink node then there is possibility of congestion in the network. Congestion has a significant role in reducing performance of the network or failure in network. Different approaches have been introduced in the past few years some include routing protocols aided with congestion detection and control mechanism, and devoted congestion control protocols. In conclusion, a comparative analysis of different protocols is made depending upon their performance on various parameters and the paper is concluded.

### SUMMARY OF THE INVENTION

The inventors have realized that when the processing of the RF signals is performed externally, e.g., in an external device such as a cloud or a gateway, the transmission of the radiofrequency signals to the external device becomes one of the main reasons for radiofrequency traffic congestion. It hampers radio communication within the sensing region and also deteriorates the performance of RF sensing. e.g., due to an increased probability of collision of messages. Furthermore, it limits the number of detection areas in a sensing environment, since each detection area requires the collection of radiofrequency signals and transmission to the external device.

It is therefore an object of the present invention to address the problems as stated above and other (related) problems and improve performance of the RF sensing system. This is solved by the independent claims. Preferred embodiments are listed in the dependent claims.

According to a first aspect, the object is achieved by a method of reconfiguring a radiofrequency-based sensing system comprising a transmitter node arranged for transmitting radiofrequency signals at a first transmission rate and a receiver node arranged for receiving the transmitted radiofrequency signals, wherein an external device, external to the transmitter/receiver node, is arranged for processing the radiofrequency signals for radiofrequency-based sensing, wherein the method comprises collecting the received radiofrequency signals at a collector node, transmitting, at a second transmission rate, the collected radiofrequency signals to the external device for processing, receiving a sensing outcome based on the processing from the external device, wherein the sensing outcome is indicative of presence of a user, and adjusting the second transmission rate based on the received sensing outcome, wherein said adjustment comprises reducing the second transmission rate when the presence of the user is detected.

The method relates to reconfiguring a radiofrequency-based sensing system comprising at least two nodes, e.g., a transmitter node arranged for transmitting radiofrequency signals at a first transmission rate and a receiver node arranged for receiving the transmitted radiofrequency signal. The transmission rate may be defined as the number of messages sent per second. In an example, the transmitted/received messages between the transmitter and the receiver nodes comprise Interpan messages. The radiofrequency-based sensing system may comprise three nodes or any n number of nodes, wherein n > 1. In an example, when the number of nodes is three, one node may be arranged for transmitting the radiofrequency signal and the other two nodes may be arranged for receiving the transmitted radiofrequency signal. Any other number of nodes and the possible combination of transmitter/receiver may also be envisioned, which for instance, may be based on the radiofrequency-based sensing application, spatial location of the nodes etc.

The radiofrequency-based sensing system is arranged for presence and/or location detection. Presence sensing may comprise vital sign detection, gesture detection etc. Additionally, and/or alternatively, other known or future applications of radiofrequency-based sensing systems (e.g., breathing detection, activity detection, vital sign detection, gesture detection etc.) are not excluded.

The transmitted/received radiofrequency signals may be used for presence and/or location detection and also for performing network communication. The network communication and/or messages transmission/reception may be according to a wireless communication protocol of any suitable type, including for example Bluetooth, ZigBee, UWB or WiFi, with the nodes having appropriate corresponding circuitry for the protocol.

The radiofrequency-based sensing and optionally wireless network communication are performed in an environment. The environment may be an outdoor space such as a garden, a balcony, a park, a street etc. The environment may be an indoor space such as a house, an office, a shop, an animal barn, a warehouse, a manufacturing site etc.

The method comprises collecting the received radiofrequency signals at a collector node. In an example, the receiver node may be the collector node. In another example, the collector node may be an external node external to the receiver and/or transmitter node. The collector node may be comprised in the radiofrequency-based sensing system.

The method further comprises transmitting, at a second transmission rate, the collected radiofrequency signals to the external device for processing. The first transmission rate may be the same as the second transmission rate, alternatively, it may be different. In an example, the collected radiofrequency signals are the instantaneous received radiofrequency signals, such that they are transmitted as they are received. The amount of the collected radiofrequency signals may be based on the first and the second transmission rates. The transmission of collected radiofrequency signals to the external device may comprise unicast messages which is defined as the messages sent directly to a single host.

The method further comprises receiving a sensing outcome based on the processing from the external device. The processing of the collected signal is performed at the external device. For instance, the processing is performed by comparing the deviation in the received collected signal with a baseline which may be defined as initial values for the sensing/detection area. Any deviation exceeding a threshold, or a signature deviation may indicate a sensing event. For example, for presence sensing, the sensing outcome may be presence or absence of a user. The sensing outcome may be received at the collector node and/or at the transmitter/receiver node (transmitter and/or receiver). The sensing outcome may be received directly from the external device or indirectly via another device.

Since the method further comprises adjusting the second transmission rate based on the received sensing outcome, the sensing outcome being indicative of the presence of a user, the network traffic is reduced thus resulting in an improved performance for the radiofrequency-based sensing system. The adjustment comprises decreasing the second transmission rate when the presence of the user is detected.

In an embodiment, the method may further comprise adjusting the first transmission rate based on the received sensing outcome.

In this advantageous embodiment, not only the second transmission rate (message transmission from the collector node to the external device) is adjusted, but also the first transmission rate (message transmission from the transmitter node to the receive node) is also adjusted, increased or decreased, for example to further reduce network traffic, thus improving RF sensing system.

In an embodiment, the method may further comprise determining, at the collector node, whether the deviation in the received radiofrequency signal over a time period exceeds a threshold, and wherein the adjustment of the second transmission rate is further based on the determination.

For example, when the collected radiofrequency signals do not vary over time, it may indicate that there is no change in the environment. In such situations, the first transmission rate may be advantageously adjusted, e.g., reduced to further improve performance of the RF sensing system.

In the invention, the radiofrequency-based sensing system is arranged for presence sensing, the sensing outcome is the presence of a user, and the adjustment of the second transmission rate comprises reducing second transmission rate when the presence of the user is detected compared to a normal transmission rate.

For presence sensing, when the presence of a user is detected, i.e., when the sensing outcome is the presence of a user in a detection region, the external device communicates the outcome, and then based on the outcome the second transmission rate is reduced. It is advantageous since when the presence is detected the transmission of collected radiofrequency signals may be reduced compared to a normal transmission rate. The normal transmission rate may be used when there is no presence.

In an embodiment, the second transmission rate may be switched back to the normal transmission rate if the presence is no longer detected for a predetermined time period.

If the presence is no longer detected for a period of time, e.g., when the user has already moved out of the detection area, and the sensing outcome indicates that the user is not in the detection area, the second transmission rate is advantageously switched back to the normal mode of operation.

In an embodiment, the adjustment of the second transmission rate may comprise reducing the second transmission rate compared to a normal transmission rate, and wherein during time period when the second transmission rate has been reduced, the collector network node may be arranged for stitching received radiofrequency signals, and further arranged for transmitting the stitched signals based on the adjusted second transmission rate. In an example, the stitching of signals may comprise the last set of messages that the collector node has received from the transmitter nodes are combined into a single message from the collector node to the external device.

In an embodiment, the adjustment of the second transmission rate may be further based on one or more of type of environment, a number of transmitter/receiver nodes, spatial location of the collector node and/or of transmitter/receiver nodes.

Additionally, and/or alternatively to the previous criteria for adjustment, the second transmission rate may be adjusted based on the type of environment. For example, for a living room a different second transmission rate may be selected compared to a corridor. The second transmission rate may further be adjusted based on a number of transmitter/receiver nodes, spatial location of the collector node and/or of transmitter/receiver nodes.

In an embodiment, the radiofrequency-based sensing system may comprise a plurality of detection areas and wherein the adjustment of the second transmission rate may be further based on an amount of active detection areas.

For a larger indoor/outdoor environment, the number of detection area may be more than 1, such that the environment is divided into a plurality of detection areas for sensing. A detection area comprises at least two nodes (transmitter/receiver) and preferably a collector node to cover an area for sensing. An active detection area is area wherein the devices (transmitter/receiving nodes) are actively transmitting/receiving. The detection area may also be named as boundary, wherein the active boundaries are one wherein the transmitter and the receiver nodes are actually transmitting/receiving interpan messages. If there are a plurality of active detection areas, additionally, and/or alternatively to the previous criteria for adjustment, and to improve traffic congestion and thus RF sensing system performance, the second transmission rate may be adjusted based on the amount of active detection areas.

In an embodiment, the adjustment of the second transmission rate may be further based on network communication between the transmitter node and the receiver node, and/or between transmitter/receiver node and the collector node.

In an example, the radiofrequency signals are also used for network communication. In other words, the radiofrequency signals intended for network communication may be used for the radiofrequency-based sensing (passive RF sensing). In such cases, additionally, and/or alternatively to the previous criteria for adjustment, the second transmission rate may be adjusted based on the network communication requirements, such as if the RF signal traffic of network communication is high, the second transmission rate may be reduced or vice versa.

In an embodiment, the transmitter and/or the receiver node comprises lighting devices, and wherein the operating status of the lighting devices is changed based on the sensing outcome.

The transmitter and/or the receiver node may comprise a lighting device. In another example, the collector node may comprise a lighting device. A lighting device is a device or structure arranged to emit light suitable for illuminating an environment, providing or substantially contributing to the illumination on a scale adequate for that purpose. In a simple example, the lighting devices are powered on to provide illumination based on sensing outcome, such as when the presence is detected, the lights are powered on. The lighting devices may be arranged for staying on (provide illumination) for a hold period even though no presence is detected during that hold period.

According to a second aspect, the object is achieved by a controller for reconfiguring a radiofrequency-based sensing system comprising a transmitter node arranged for transmitting radiofrequency signals at a first transmission rate and a receiver node arranged for receiving the transmitted radiofrequency signal, wherein the controller comprises a processor arranged for controlling the execution of the steps of the method of the first aspect.

According to a third aspect, the object is achieved by a system for reconfiguring a radiofrequency-based sensing system, wherein the system comprises a controller according to the second aspect, and a transmitter node arranged for transmitting radiofrequency signals at a first transmission rate and a receiver node arranged for receiving the transmitted radiofrequency signal. The system may further comprise an external device, external to the transmitter/receiver node, arranged for processing the radiofrequency signals for radiofrequency-based sensing. The system may further comprise a collector node arranged for collecting the received radiofrequency signals, and transmitting, at a second transmission rate, the collected radiofrequency signals to the external device for processing.

According to a fourth aspect, the object is achieved by a computer program product comprising instructions which, when the program is executed by a computer, cause the computer to carry out the steps of the method of the first aspect.

It should be understood that the computer program product, the controller, and the system may have similar and/or identical embodiments and advantages as the above-mentioned methods.

### BRIEF DESCRIPTION OF THE DRAWINGS

The above, as well as additional objects, features and advantages of the disclosed systems, devices and methods will be better understood through the following illustrative and non-limiting detailed description of embodiments of systems, devices and methods, with reference to the appended drawings, in which:
Fig. 1 shows schematically and exemplary an embodiment of a system for reconfiguring a radiofrequency-based sensing system,
Fig. 2 shows schematically and exemplary an embodiment of a controller for reconfiguring a radiofrequency-based sensing system,
Fig. 3 shows schematically and exemplary a flowchart illustrating an embodiment of a method for reconfiguring a radiofrequency-based sensing system.

All the figures are schematic, not necessarily to scale, and generally only show parts which are necessary in order to elucidate the invention, wherein other parts may be omitted or merely suggested.

### DETAILED DESCRIPTION OF EMBODIMENTS

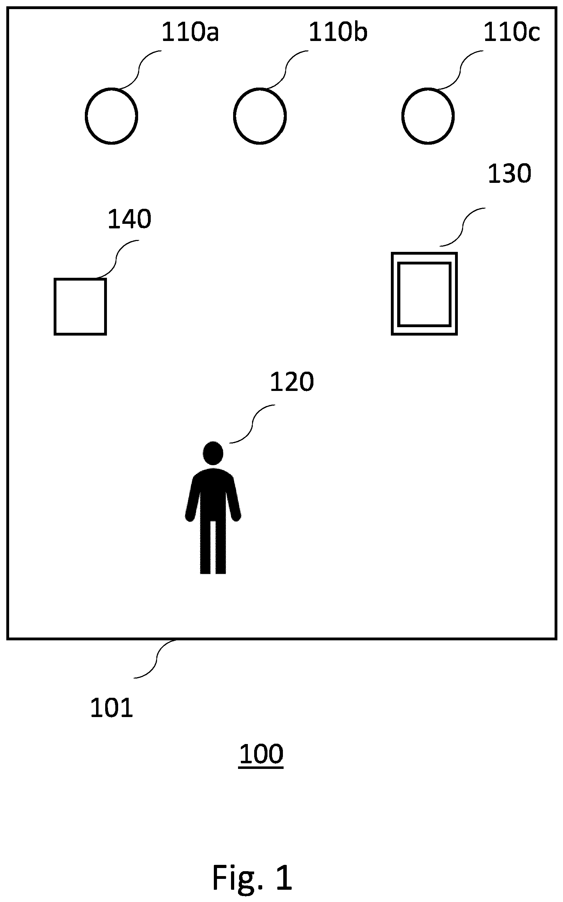

Fig. 1 shows schematically and exemplary an embodiment of a system 100 for reconfiguring a radiofrequency-based sensing system. The system 100 may be comprised in an environment 101. The environment may be an indoor environment such as a house, an office, a shop, an animal barn etc., or may be an outdoor environment such as street, parking lot etc.

The system 100 comprises a plurality of lighting devices 110a-c arranged for transmitting radiofrequency signals at a first transmission rate and for receiving the transmitted radiofrequency signal. A lighting device 110a-c is a device or structure arranged to emit light suitable for illuminating an environment, providing or substantially contributing to the illumination on a scale adequate for that purpose. The system 100 may comprise any number of lighting devices 110a-c. A lighting device 110a-c comprises at least one light source or lamp, such as an LED-based lamp, gas-discharge lamp or filament bulb, etc., plus any associated support, casing or other such housing. Each of the lighting devices 110a-c may take any of a variety of forms, e.g., a ceiling mounted luminaire, a wall-mounted luminaire, a wall washer, or a free-standing luminaire (and the luminaires need not necessarily all be of the same type). In the exemplary figure, the lighting devices 110a-c are ceiling mounted luminaires. Additionally, and/or alternatively, the transmitter and/or receiver nodes may comprise a sensor, a gateway, a switch etc.

The system 100 may comprise at least one detection area. The detection area or the sensing area is defined as the area/volume covered by the sensing system 100. For example, for a home, sensing in different rooms defines different detection/sensing areas. Each of the detection area comprises at least a transmitter node and a receiver node and may further comprise a collector node. The detection areas may be (at least partially) overlapping such that the receiver node of a detection area may be arranged for receiving a radiofrequency signal from the transmitter node of the other detection area. Alternatively, the detection areas may be non-overlapping.

The system 100 further comprises a collector node 140. The collector node 140 may be a lighting device or any other device such as a sensor, a gateway, a switch etc. The collector node 140 may be a separate device, alternatively, the collector node 140 may be one of the receiver nodes 110a-c. The collector node 140 may be arranged for receiving the radiofrequency signals, e.g., from the receiver node 110a-c, and further arranged for collecting the received radiofrequency signals. The collector node 140 may be further arranged for transmitting, at a second transmission rate, the collected radiofrequency signals to the external device for processing. The collector node 140 may be comprised in the radiofrequency sensing system 100.

The system 100 may further comprise an external device 130, external to the transmitter/receiver 110a-c and/or the collector device 140. The external device 130 may be comprised in the environment 101 e.g., the external device 130 is a gateway, a bridge device etc., or external to the environment 101 such as cloud or service device. The external device 130 may be arranged for processing the received radiofrequency signals from the collector node 140. The processing may be based on comparing a characteristic of the received radiofrequency signals with a baseline. The baselines are the initial or reference values defined for the sensing environment 101. Any change exceeding a threshold in the characteristics compared to the baseline indicates a sensing event. The characteristic may be a signal strength of the received radiofrequency signals such as RSSI and/or may be channel state information CSI. The sensing applications may include but not limited to presence sensing of a user 120 in the detection area, location detection, gesture detection, fall detection, sleep monitoring, vital sign detection such as heart rate detection, breathing detection etc.

The wireless radio communication between the transmitter and receiver nodes 110a-c, and/or between the receiver node 110a-c and the collector node 140, and/or between the collector node 140 and the external device 130 may be according to a protocol of any suitable type, including for example Bluetooth, ZigBee, Thread and/or Wi Fi, with the transmitter 110a-c/ receiver 110a-c/ collector node 140 and/or the external device 130 having appropriate corresponding circuitry (not shown) for the protocol that is used.

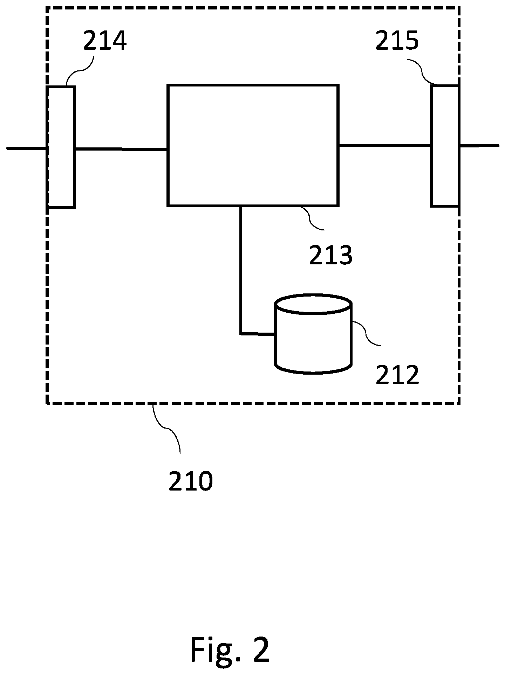

Fig. 2 shows schematically and exemplary an embodiment of a controller 210 for reconfiguring a radiofrequency-based sensing system. The controller 210 may comprise an input unit 214 and an output unit 215. The input 214 and the output 215 units may be comprised in a transceiver (not shown) or input 214 may be comprised in a receiver and the output 215 is comprised in a transmitter, arranged for receiving (input unit 214) and transmitting (output unit 215) radiofrequency signals.

The controller 210 may further comprise a memory 212 which may be arranged for storing communication IDs of the lighting devices 110a-c and/or the collector device 140, and/or the external device 130 etc. The controller 210 may comprise a processor 213 arranged for executing the steps or at least controlling the execution of the steps of the method according to the first aspect.

The controller 210 may be implemented in a unit separate from the lighting devices 110a-c/collector node 140/external device 130, such as wall panel, desktop computer terminal, or even a portable terminal such as a laptop, tablet or smartphone. Alternatively, the controller 210 may be incorporated into the same unit as the collector node 140 and/or the same unit as one of the lighting devices 110a-c and/or the same unit as the external device 130. Further, the controller 210 may be implemented in the environment 101 or remote from the environment (e.g. on a server); and the controller 210 may be implemented in a single unit or in the form of distributed functionality distributed amongst multiple separate units (e.g. a distributed server comprising multiple server units at one or more geographical sites, or a distributed control function distributed amongst the lighting devices 110a-c or amongst the lighting devices 110a-b and the collector node 140 and/or external device 130). Furthermore, the controller 210 may be implemented in the form of software stored on a memory (comprising one or more memory devices) and arranged for execution on a processor (comprising one or more processing units), or the controller 210 may be implemented in the form of dedicated hardware circuitry, or configurable or reconfigurable circuitry such as a PGA or FPGA, or any combination of these.

To enable the controller 210, for example, to receive or transmit radiofrequency signals, the communication may be implemented in by any suitable wireless means such as a local (short range) RF network, e.g., a Wi-Fi, ZigBee or Bluetooth network; or any combination of these and/or other means.

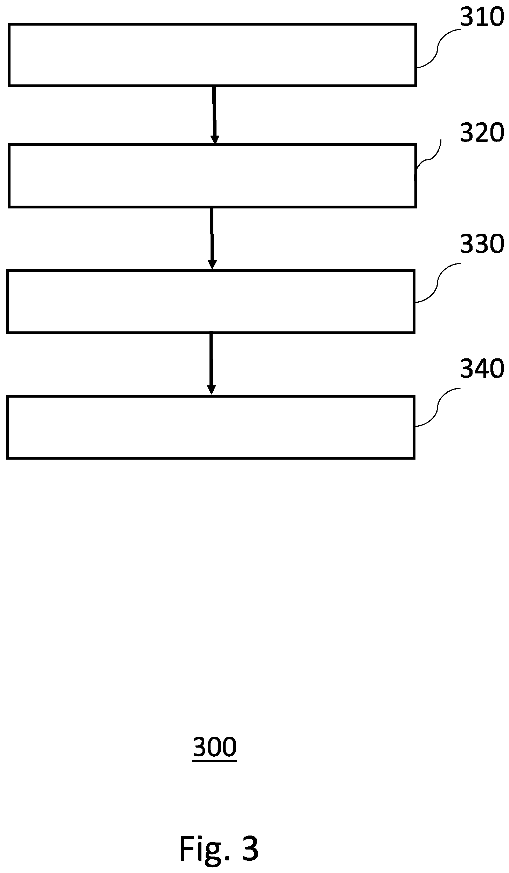

Fig. 3 shows schematically and exemplary a flowchart illustrating an embodiment of a method 300 for reconfiguring a radiofrequency-based sensing system. The radiofrequency-based sensing system comprises a transmitter node 110a-c arranged for transmitting radiofrequency signals at a first transmission rate and a receiver node 110a-c arranged for receiving the transmitted radiofrequency signals. The transmitter and/or receiver node 110a-c may be a lighting device, a sensor, a gateway, a switch or any network device capable of transmitting and/or receiving radiofrequency signals. The radio frequency signals may comprise any radio band such as 2.4GHz, 5GHz, 60GHz etc. The transmission and reception of radiofrequency signals may be according to any known or future wireless communication protocol. The first transmission rate may comprise transmitting 5 messages per second or may be in the range of 1-10 messages per second. The first transmission rate may be based on the network, the transmitter node, receiver node and other contextual factors. Therefore, other first transmission rates are not excluded.

An external device 130 which is external to the transmitter and/or receiver node, is arranged for processing the radiofrequency signals for radiofrequency-based sensing. The external device 130, such as a gateway, a bridge, etc., may be located in the environment 101 or external to the environment 101 such as cloud, server device etc. The processing may involve comparing the received radiofrequency signals with a baseline and determining a difference between the received radiofrequency signal and the baseline exceeding or not exceeding a threshold. The baselines are defined for each environment/detection areas. The received radiofrequency signals are affected by the presence of e.g., a human, an animal or any waterbody object, via reflections, absorption, scattering etc. Such deviation compared to a baseline (e.g., a null value of the environment) represents presence (or other sensing functions). The processing may involve determining signature variations in the received radiofrequency signals, e.g., variation which may represent a presence of a human, an animal etc.

The method 300 comprises collecting 310 the received radiofrequency signals at a collector node 140. The received radiofrequency signals may be received from the receiver node 110a-c, which is also arranged for transmitting the received radiofrequency (received from the transmitter node 110a-c) to the collector node 140. In another example, the collector node 140 is arranged for receiving radiofrequency signals from the transmitter node 110a-c. The collector 140 may comprise a memory arranged for storing the received radiofrequency signals.

The method 300 may comprise transmitting 320, at a second transmission rate, the collected radiofrequency signals to the external device 130 for processing. The method 300 may further comprise receiving 330 a sensing outcome based on the processing from the external device. The external node 130 may comprise a processor for processing the received radiofrequency signal. The sensing outcome is based on the sensing function, the sensing outcome is presence or no presence (absence) of a user. In an example, each transmitter node sends 1 message to the collector node and then the collector node sends the aggregated results to the external device. The collection of received radiofrequency signals may be configurable, and has an impact on the latency of the system.

The method 300 further comprises adjusting 340 the second transmission rate based on the received sensing outcome. The adjustment comprises changing the second transmission rate, by decreasing it. For example, when the radiofrequency-based sensing is arranged for presence sensing, and wherein the sensing outcome is the presence of a user 120, the adjustment of the second transmission rate comprises reducing second transmission rate when the presence of the user is detected compared to a normal transmission rate. For instance, the lighting devices 110a-c may be controlled based on the presence detection, e.g., they are powered on based on presence. The lighting devices 110a-c may be arranged to stay in a power ON state for a hold time period irrespective of the sensing outcome. In this hold time period, the second transmission rate may be adjusted, e.g., reduced. It is beneficial since the lighting devices 110a-c are powered on anyways irrespective of sensing outcome, therefore the reduction of the second transmission rate will reduce traffic network and thus improve RF sensing and network communication. The second transmission rate may be adjusted such as to send the collected radiofrequency signals just before the hold time period is expiring. Furthermore, as an example, the second transmission rate is switched back to the normal transmission rate if the presence is no longer detected for a predetermined time period. Typical transmission rates may be between 1-10 per second for the messages from the collector node to the external device. For each of the 1-10 messages the transmitter nodes may typically send between 3-5 messages to the collector node. In an example, if the collector node has no direct path to the gateway, this message will 'hop' via other nodes to the external device, increasing again the number of unicast packets flying through the air. The transmission rate may be configurable and based on the collector node, network configuration etc.

The adjustment 340 of the second transmission rate may be reduced based on a deviation of the received radiofrequency signals. For example, when the received radiofrequency does not change over time, the second transmission rate may also be reduced. Additionally, and/or alternatively, the adjustment 340 of the second transmission rate may be based on one or more of type of an environment 101, a number of transmitter/receiver nodes 110a-c, spatial location of the collector node 140 and/or of transmitter/receiver nodes. For example, corridor may require a faster transmission rate compared to a room. Similarly, transmitter/receiver nodes located on the exit/entrance may require a fast processing/transfer of messages compared to nodes located elsewhere in a room.

Additionally, and/or alternatively, the adjustment of the second transmission rate may be further based on an amount of active detection areas. The radiofrequency-based sensing system may comprise a plurality of detection areas, and each detection area may comprise at least two nodes, and a respectively collector node 140 arranged for transmitting the collected radiofrequency signals to the external device. In such cases, the adjustment of the second transmission rate is further based on an amount of active detection areas.

Additionally, and/or alternatively, the adjustment of the second transmission rate may be further based on network communication between transmitter node and the receiver node, and/or between transmitter/receiver node and the collector node.

The method 300 may be executed by computer program code of a computer program product when the computer program product is run on a processing unit of a computing device, such as the processor 213 of the controller 210.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer or processing unit. In the device claim enumerating several means, several of these means may be embodied by one and the same item of hardware.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors or even the 'cloud'.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

## Claims

1. A method (300) of reconfiguring a radiofrequency-based sensing system comprising a transmitter node (110a-c) arranged for transmitting radiofrequency signals at a first transmission rate and a receiver node (110a-c) arranged for receiving the transmitted radiofrequency signals, wherein an external device (130), external to the transmitter/receiver node, is arranged for processing the radiofrequency signals for radiofrequency-based sensing, wherein the method comprises:
- collecting (310) the received radiofrequency signals at a collector node (140),
- transmitting (320), at a second transmission rate, the collected radiofrequency signals to the external device for processing,
- receiving (330) a sensing outcome based on the processing from the external device, **characterized in that** said sensing outcome is indicative of a presence of a user, and
- adjusting (340) the second transmission rate based on the received sensing outcome, wherein said adjustment comprises reducing the second transmission rate when the presence of the user is detected.

2. The method according to claim 1, wherein the method further comprises
- adjusting the first transmission rate based on the received sensing outcome.

3. The method according to any of the preceding claims, wherein the method further comprises:
- determining, at the collector node, whether a deviation in the received radiofrequency signals over a time period exceeds a threshold, and wherein the adjustment of the second transmission rate is further based on the determination.

4. The method according to claim 1, wherein the second transmission rate is switched back to the normal transmission rate if the presence is no longer detected for a predetermined time period.

5. The method according to any of the precedent claims, wherein the adjustment of the second transmission rate comprises reducing the second transmission rate compared to a normal transmission rate, and wherein during the time period when the second transmission rate has been reduced, the collector network node is arranged for stitching received radiofrequency signals, and further arranged for transmitting the stitched signals based on the adjusted second transmission rate.

6. The method according to any of the preceding claims, wherein the adjustment of the second transmission rate is further based on one or more of type of an environment, a number of transmitter/receiver nodes, spatial location of the collector node and/or of transmitter/receiver nodes.

7. The method according to any of the preceding claims, wherein the radiofrequency-based sensing system comprises a plurality of detection areas and wherein the adjustment of the second transmission rate is further based on an amount of active detection areas.

8. The method according to any of the preceding claims, wherein the adjustment of the second transmission rate is further based on network communication between transmitter node and the receiver node, and/or between transmitter/receiver node and the collector node.

9. The method according to any of the preceding claims, wherein the transmitter and/or the receiver node comprises lighting devices, and wherein the operating status of the lighting devices is changed based on the sensing outcome.

10. A controller for reconfiguring a radiofrequency-based sensing system comprising a processor which is arranged for controlling the execution of the steps of the method according to any of the claims 1-9.

11. A system (100) for reconfiguring a radiofrequency-based sensing system, wherein the system comprises:
- a transmitter node (110a-c) arranged for transmitting radiofrequency signals at a first transmission rate and a receiver node (110a-c) arranged for receiving the transmitted radiofrequency signals;
- an external device (130), external to the transmitter/receiver node, arranged for processing the radiofrequency signals for radiofrequency-based sensing;
- a collector node (140) arranged for receiving and collecting the radiofrequency signals, the collector node further configured to:
- transmit, at a second transmission rate, the collected radiofrequency signals to the external device for processing;
- receive a sensing outcome based on the processing from the external device, **characterized in that** said sensing outcome is indicative of a presence of a user, and
- adjust the second transmission rate based on the received sensing outcome, wherein said adjustment comprises reducing the second transmission rate when the presence of the user is detected.

12. The system according to claim 11, wherein the system further comprises the controller according to claim 10.

13. A computer program product comprising instructions which, when the program is executed by a processor of the controller according to claim 10, cause the processor to carry out the steps of the method of any one of claims 1-9.

## Patentansprüche

1. Verfahren (300) zum Neukonfigurieren eines auf Hochfrequenz basierenden Erfassungssystems, umfassend einen Übertragungsknoten (110a-c), der zum Übertragen von Hochfrequenzsignalen mit einer ersten Übertragungsrate eingerichtet ist, und einen Empfängerknoten (110a-c), der zum Empfangen der gesendeten Hochfrequenzsignale eingerichtet ist, wobei eine externe Vorrichtung (130) extern des Übertragungs-/Empfängerknotens zum Verarbeiten der Hochfrequenzsignale für eine auf Hochfrequenz basierende Erfassung eingerichtet ist, wobei das Verfahren umfasst:
- Sammeln (310) der empfangenen Hochfrequenzsignale an einem Sammelknoten (140),
- Übertragen (320), mit einer zweiten Übertragungsrate, der gesammelten Hochfrequenzsignale an die externe Vorrichtung zum Verarbeiten,
- Empfangen (330) eines Erfassungsergebnisses basierend auf dem Verarbeiten von der externen Vorrichtung, **dadurch gekennzeichnet, dass** das Erfassungsergebnis eine Anwesenheit eines Benutzers angibt und
- Anpassen (340) der zweiten Übertragungsrate basierend auf dem empfangenen Erfassungsergebnis, wobei die Anpassung ein Reduzieren der zweiten Übertragungsrate umfasst, wenn die Anwesenheit des Benutzers erkannt wird.

2. Verfahren nach Anspruch 1, wobei das Verfahren ferner umfasst
- Anpassen der ersten Übertragungsrate basierend auf dem empfangenen Erfassungsergebnis.

3. Verfahren nach einem der vorstehenden Ansprüche, wobei das Verfahren ferner umfasst:
- Bestimmen, an dem Sammelknoten, ob eine Abweichung in den empfangenen Hochfrequenzsignalen über einen Zeitraum einen Schwellenwert überschreitet, und wobei die Anpassung der zweiten Übertragungsrate ferner auf der Bestimmung basiert.

4. Verfahren nach Anspruch 1, wobei die zweite Übertragungsrate wieder auf die normale Übertragungsrate umgeschaltet wird, falls die Anwesenheit für einen zuvor bestimmten Zeitraum nicht mehr erkannt wird.

5. Verfahren nach einem der vorstehenden Ansprüche, wobei die Anpassung der zweiten Übertragungsrate das Reduzieren der zweiten Übertragungsrate im Vergleich zu einer normalen Übertragungsrate umfasst, und wobei der Sammelnetzwerkknoten während dem Zeitraum, in dem die zweite Übertragungsrate reduziert wurde, zum Zusammenfügen empfangener Hochfrequenzsignale und ferner zum Übertragen der zusammengefügten Signale basierend auf der angepassten zweiten Übertragungsrate eingerichtet ist.

6. Verfahren nach einem der vorstehenden Ansprüche, wobei die Anpassung der zweiten Übertragungsrate ferner auf einem oder mehreren basiert von einer Art einer Umgebung, einer Anzahl der Übertragungs-/Empfängerknoten, einer räumlichen Position des Sammelknotens und/oder der Übertragungs-/Empfängerknoten.

7. Verfahren nach einem der vorstehenden Ansprüche, wobei das auf Hochfrequenz basierende Erfassungssystem eine Vielzahl von Erkennungsbereichen umfasst und wobei die Anpassung der zweiten Übertragungsrate ferner auf einer Menge von aktiven Erkennungsbereichen basiert.

8. Verfahren nach einem der vorstehenden Ansprüche, wobei die Anpassung der zweiten Übertragungsrate ferner auf einer Netzwerkkommunikation zwischen dem Übertragungsknoten und dem Empfängerknoten und/oder zwischen dem Übertragungs-/Empfängerknoten und dem Sammelknoten basiert.

9. Verfahren nach einem der vorstehenden Ansprüche, wobei der Übertragungs- und/oder der Empfängerknoten Beleuchtungsvorrichtungen umfasst und wobei der Betriebsstatus der Beleuchtungsvorrichtungen basierend auf dem Erfassungsergebnis geändert wird.

10. Steuerung zum Neukonfigurieren eines auf Hochfrequenz basierenden Sensorsystems, umfassend einen Prozessor, der zum Steuern der Ausführung der Schritte des Verfahrens nach einem der Ansprüche 1 bis 9 eingerichtet ist.

11. System (100) zum Neukonfigurieren eines auf Hochfrequenz basierenden Sensorsystems,
wobei das System umfasst:
- einen Übertragungsknoten (110a-c), der zum Übertragen von Hochfrequenzsignalen mit einer ersten Übertragungsrate eingerichtet ist, und einen Empfängerknoten (110a-c), der zum Empfangen der übertragenen Hochfrequenzsignale eingerichtet ist;
- eine externe Vorrichtung (130) extern des Übertragungs-/Empfängerknotens, die zum Verarbeiten der Hochfrequenzsignale für eine auf Hochfrequenz basierende Erfassung eingerichtet ist;
- einen Sammelknoten (140), der zum Empfangen und Sammeln der Hochfrequenzsignale eingerichtet ist, wobei der Sammelknoten ferner konfiguriert ist zum:
- Übertragen, mit einer zweiten Übertragungsrate, der gesammelten Hochfrequenzsignale an die externe Vorrichtung zum Verarbeiten;
- Empfangen eines Erfassungsergebnisses basierend auf dem Verarbeiten von der externen Vorrichtung, **dadurch gekennzeichnet, dass** das Erfassungsergebnis eine Anwesenheit eines Benutzers angibt und
- Anpassen der zweiten Übertragungsrate basierend auf dem empfangenen Erfassungsergebnis, wobei die Anpassung das Reduzieren der zweiten Übertragungsrate umfasst, wenn die Anwesenheit des Benutzers erkannt wird.

12. System nach Anspruch 11, wobei das System ferner die Steuerung nach Anspruch 10 umfasst.

13. Computerprogrammprodukt, umfassend Anweisungen, die, wenn das Programm durch einen Prozessor der Steuerung nach Anspruch 10 ausgeführt wird, den Prozessor veranlassen, die Schritte des Verfahrens nach einem der Ansprüche 1 bis 9 vorzunehmen.

## Revendications

1. Procédé (300) de reconfiguration d'un système de détection basée sur des radiofréquences comprenant un nœud transmetteur (110a-c) conçu pour transmettre des signaux radiofréquences à une première vitesse de transmission et un nœud récepteur (110a-c) conçu pour recevoir les signaux radiofréquences transmis, dans lequel un dispositif externe (130), externe au nœud transmetteur/récepteur, est conçu pour traiter les signaux radiofréquences pour la détection basée sur les radiofréquences, dans lequel le procédé comprend :
- la collecte (310) des signaux radiofréquences reçus au niveau d'un nœud collecteur (140),
- la transmission (320), à une seconde vitesse de transmission, des signaux radiofréquences collectés au dispositif externe pour traitement,
- la réception (330) d'un résultat de détection basé sur le traitement du dispositif externe, **caractérisé en ce que** ledit résultat de détection indique une présence d'un utilisateur, et
- l'ajustement (340) de la seconde vitesse de transmission sur la base des résultats de détection reçus, dans lequel ledit ajustement comprend la réduction de la seconde vitesse de transmission lorsque la présence de l'utilisateur est détectée.

2. Procédé selon la revendication 1, dans lequel le procédé comprend en outre
- l'ajustement de la première vitesse de transmission sur la base du résultat de détection reçu.

3. Procédé selon l'une quelconque des revendications précédentes, dans lequel le procédé comprend en outre :
- la détermination, au niveau du nœud collecteur, établissant si un écart dans les signaux radiofréquences reçus sur une période de temps dépasse un seuil, et dans lequel l'ajustement de la seconde vitesse de transmission est en outre basé sur la détermination.

4. Procédé selon la revendication 1, dans lequel la seconde vitesse de transmission est ramené à la vitesse de transmission normale si la présence n'est plus détectée pendant une période de temps prédéterminée.

5. Procédé selon l'une quelconque des revendications précédentes, dans lequel l'ajustement de la seconde vitesse de transmission comprend la réduction de la seconde vitesse de transmission par comparaison avec une vitesse de transmission normale, et dans lequel, pendant la période de temps où la seconde vitesse de transmission a été réduite, le nœud de réseau collecteur est conçu pour assembler les signaux radiofréquences reçus, et est en outre conçu pour transmettre les signaux assemblés sur la base de la seconde vitesse de transmission ajustée.

6. Procédé selon l'une quelconque des revendications précédentes, dans laquelle l'ajustement de la seconde vitesse de transmission est en outre basé sur un ou plusieurs d'un type d'un environnement, d'un nombre de nœuds transmetteurs/récepteurs, d'un emplacement spatial du nœud collecteur et/ou des nœuds transmetteurs/récepteurs.

7. Procédé selon l'une quelconque des revendications précédentes, dans lequel le système de détection basée sur des radiofréquences comprend une pluralité de zones de détection et dans lequel l'ajustement de la seconde vitesse de transmission est en outre basé sur une quantité de zones de détection actives.

8. Procédé selon l'une quelconque des revendications précédentes, dans lequel l'ajustement de la seconde vitesse de transmission est en outre basé sur la communication réseau entre le nœud transmetteur et le nœud récepteur, et/ou entre le nœud transmetteur/récepteur et le nœud collecteur.

9. Procédé selon l'une quelconque des revendications précédentes, dans lequel le nœud transmetteur et/ou le nœud récepteur comprennent des dispositifs d'éclairage, et dans lequel l'état de fonctionnement des dispositifs d'éclairage est modifié sur la base du résultat de détection.

10. Dispositif de commande pour la reconfiguration d'un système de détection basée sur des radiofréquences comprenant un processeur qui est conçu pour commander l'exécution des étapes de procédé selon l'une quelconque des revendications 1 à 9.

11. Système (100) de reconfiguration d'un système de détection basée sur des radiofréquences,
dans lequel le système comprend :
- un nœud transmetteur (110a-c) conçu pour transmettre des signaux radiofréquences à une première vitesse de transmission et un nœud récepteur (110a-c) conçu pour recevoir les signaux radiofréquences transmis ;
- un dispositif externe (130), externe au nœud transmetteur/récepteur, conçu pour traiter les signaux radiofréquences pour une détection basée sur des radiofréquences ;
- un nœud collecteur (140) conçu pour recevoir et collecter les signaux radiofréquences, le nœud collecteur étant en outre configuré pour :
- transmettre, à une seconde vitesse de transmission, les signaux radiofréquences collectés au dispositif externe pour traitement ;
- recevoir un résultat de détection basé sur le traitement du dispositif externe, **caractérisé en ce que** ledit résultat de détection indique une présence d'un utilisateur, et
- ajuster la seconde vitesse de transmission sur la base du résultat de détection reçu, dans lequel ledit ajustement comprend la réduction de la seconde vitesse de transmission lorsque la présence de l'utilisateur est détectée.

12. Système selon la revendication 11, dans lequel le système comprend en outre le dispositif de commande selon la revendication 10.

13. Produit-programme informatique comprenant des instructions qui, lorsque le programme est exécuté par un processeur du dispositif de commande selon la revendication 10, amènent le processeur à effectuer les étapes du procédé selon l'une quelconque des revendications 1 à 9.
